# EUROPÄISCHE PATENTSCHRIFT

(11) **EP 2 848 559 B1**
(45) Veröffentlichungstag und Bekanntmachung des Hinweises auf die Patenterteilung: **30.03.2016**
(21) Anmeldenummer: 14002869.7
(22) Anmeldetag: 18.08.2014
(51) Int. Cl.: B65G 15/14, B29C 49/42, B65G 23/44

(54) **Klemmförderer mit Spannvorrichtung**
Clamp conveyor with clamping device
Convoyeur à pince doté d'un dispositif de serrage

(30) Priorität: 16.09.2013 CH 15882013
(43) Veröffentlichungstag der Anmeldung: 18.03.2015
(73) Patentinhaber: M. Tanner AG, 8308 Illnau (CH)
(72) Erfinder: Tanner, Marcel, CH- 8303 Bassersdorf (CH)
(74) Vertreter: Schaad, Balass, Menzl & Partner AG

(56) Entgegenhaltungen:
- DE-U1-202004 021 491
- US-A1- 2008 017 481

## Beschreibung

Die Erfindung betrifft einen Klemmförderer zum Transport von Vorformlingen für Kunststoffbehälter mittels von zumindest einem Klemmriemen, wobei der Klemmförderer zumindest eine Spanneinheit zum Spannen des zumindest einen Klemmriemens aufweist.

Ein Klemmförderer, welcher Vorformlinge, insbesondere PET-Vorformlinge, mittels eines profilierten Klemmriemens fördert, ist aus der EP 1 925 575 A1 bekannt.

Des Weiteren ist aus der die Merkmale des Oberbegriffs des Anspruchs 1 offenbarenden DE 20 2004 021 491 U1 eine Inspektionsmaschine mit einer Vorrichtung zum Transportieren von Preforms, welche einen Tragring aufweisen, bekannt. Die Maschine umfasst dabei zumindest drei Transportriemen, von denen zumindest einer mittels eines Motors antreibbar ist und in einer Transportebene umläuft. Die Transportebene ist dabei an der vom Preform wegweisenden Stelle in einem Winkel von grösser 0° und kleiner 90° zur Tragringebene angeordnet.

Auf dem Gebiet der Klemmförderer ist zuletzt das Bedürfnis nach einer Spanneinheit für die Klemmriemen des Klemmförderers laut geworden, mit Hilfe derer ein Maschinenführer die auf die Spannrolle wirkende Kraft präzise einstellen und ablesen kann, ohne den Klemmförderer öffnen zu müssen.

Es ist daher die Aufgabe der vorliegenden Erfindung, einen Klemmförderer bereitzustellen, welcher über einen Mechanismus verfügt, mittels dem die auf die Spannrolle einwirkende Kraft auf einfache und verlässliche Weise nach aussen ab- bzw. von aussen eingeleitet werden kann.

Diese Aufgabe wird in Übereinstimmung mit der vorliegenden Erfindung gelöst durch einen Klemmförderer zum Transport von Vorformlingen für Kunststoffbehälter mittels von zumindest einem Klemmriemen, wobei der Klemmförderer zumindest eine Spanneinheit aufweist mit einer Spannrolle, über welche die Rücktrume des zumindest einen Klemmriemens geführt sind, einer ersten Kraftmessvorrichtung für eine an der Spannrolle angreifende Kraft, einer innerhalb des Klemmförderers angeordneten mechanischen Übersetzungs-einrichtung, wobei die Spannrolle zumindest über ein erstes Seilelement mit der mechanischen Übersetzungseinrichtung wirkverbunden ist, wobei die erste Kraftmessvorrichtung über ein zweites Seilelement mit der mechanischen Übersetzungseinrichtung wirkverbunden und mit einer Justiereinrichtung zum Einstellen der an der Spannrolle angreifenden Kraft gekoppelt ist.

In einer bevorzugten Ausführungsform der vorliegenden Erfindung ist die mechanische Übersetzungseinrichtung in der Art eines Flaschenzugs ausgestaltet. Hierdurch kann auf einfache und effiziente Weise die Einstellung des gewünschten Übersetzungsverhältnisses erreicht werden. Nach dem Prinzip des Faktorflaschenzugs können dabei (ganzzahlige) Übersetzungsverhältnisse von 1:2, 1:3, 1:4 oder 1:5 verwirklicht werden. Denkbar ist grundsätzlich auch, dass die mechanische Übersetzungseinrichtung nach dem Prinzip des zweiarmigen Hebels ausgestaltet ist. So können ggf. auch nicht-ganzzahlige Übersetzungs-verhältnisse eingestellt werden.

In einer weiteren bevorzugten Ausführungsform der vorliegenden Erfindung ist der Flaschenzug in Form eines beweglichen Umlenkblocks ausgestaltet. Der Umlenkblock kann grundsätzlich jede beliebige Gestalt annehmen und kann innerhalb des Klemmförderers frei angeordnet oder aber geführt sein. Vorzugsweise ist der Umlenkblock allerdings in Form eines auf einer Führungseinrichtung geführten Schlittens ausgestaltet. Die Führungseinrichtung kann dabei aus einer oder mehreren Stangen bestehen, auf denen der Schlitten gleitet.

In einer noch weiteren bevorzugten Ausführungsform der vorliegenden Erfindung ist das erste Seilelement über eine Umlenkrolle, welche auf dem Schlitten (z.B. auf dessen Oberseite) angeordnet ist, geführt und stationär innerhalb des Klemmförderers befestigt (z.B. am Gehäuse oder dem Maschinengestell). Hierdurch kann das Flaschenzug-Prinzip für die besonders bevorzugte 1:2 Übersetzung auf besonders effektive Weise realisiert werden.

In einer anderen bevorzugten Ausführungsform der vorliegenden Erfindung ist zwischen der Spannrolle und dem ersten Seilelement eine zweite Kraftmessvorrichtung angeordnet. Hierbei handelt es sich in der Regel um eine Federzugwaage, um auch die an dieser Stelle wirkende Kraft überprüfen zu können.

In einer noch anderen bevorzugten Ausführungsform der vorliegenden Erfindung sind die erste Kraftmessvorrichtung und die Justiereinrichtung an einer Aussenseite des Klemmförderers angeordnet. Die erste Kraftmessvorrichtung ist in der Regel als Zeigerwaage ausgebildet, um dem Maschinenführer ein präzises Ablesen der an der Spannrolle angreifenden Kraft zu ermöglichen. Die Justiereinrichtung wird bevorzugt so ausgestaltet, dass an einer Aufhängevorrichtung der Zeigerwaage ein Gewindeschaft befestigt ist, welcher mittels einer Zugmutter gegenüber einer fest an der Aussenseite (bzw. dem Gehäuse) des Klemmförderers montierten Haltevorrichtung (z.B. einem U-Profil) bewegt werden kann.

In einer weiteren bevorzugten Ausführungsform der vorliegenden Erfindung wird das zweite Seilelement über zumindest eine Umlenkrolle an einer Aussenseite des Klemmförderers zum beweglichen Schlitten geführt. Hierdurch kann die Anordnung der Zeigerwaage an der Aussenseite des Klemmförderers, und deren Verbindung zur mechanischen Übersetzungseinrichtung, auf konstruktiv einfache Weise zuverlässig erreicht werden.

In einer wiederum anderen bevorzugten Ausführungsform der vorliegenden Erfindung wird das erste Seilelement über zumindest eine Umlenkrolle innerhalb des Klemmförderers zum beweglichen Schlitten geführt. In der Regel werden aufgrund der räumlichen Gegebenheiten innerhalb des Klemmförderers zwei oder drei Umlenkrollen benötigt, um die Spannrolle (oder einer die Spannrolle führenden Wippe, vgl. unten) mit der mechanischen Übersetzungseinrichtung so zu verbinden, dass keine Störungen bzw. Wechselwirkungen mit anderen Komponenten des Klemmförderers entstehen.

In noch einer anderen bevorzugten Ausführungsform der vorliegenden Erfindung wird die Spannrolle in einer Wippe geführt. Auf diese Weise kann die Spannung des Klemmriemens auf besonders zuverlässige Weise gewährleistet werden. Die Wippe weist bevorzugt weiterhin eine Gelenkverbindung auf und ein freies Ende, wobei die Spannrolle zwischen der stationären Rolle und dem freien Ende der Wippe angeordnet ist. Diese Art der Anordnung hat sich zum Spannen des Klemmriemens als besonders geeignet herausgestellt. Anstatt etwa direkt mit der Spannrolle, ist das erste Seilelement bei dieser Ausführungsform mit dem freien Ende der Wippe wirkverbunden. Vorzugsweise ist zwischen dem ersten Seilelement und dem freien Ende der Wippe eine zweite Kraftmessvorrichtung angeordnet, um auch an dieser Stelle eine Anzeige der wirkenden Kraft bereitzustellen.

Dabei ist vorzugsweise zwischen der Gelenkverbindung und der Spannrolle ein erster Hebelarm ausgebildet und zwischen der Gelenkverbindung und dem freien Ende (bzw. einem am freien Ende angeordneten Zugbolzen) ein zweiter Hebelarm. Hierdurch wird wiederum eine Übersetzungsmöglichkeit geschaffen. Bevorzugt ist dabei der zweite Hebelarm in etwa doppelt so lang wie der erste Hebelarm - was wiederum ein Übersetzungsverhältnis von 1:2 zur Folge hat.

Mit anderen Worten, die auf die Spannrolle einwirkende Kraft ist doppelt so gross wie die Kraft, welche am freien Ende der Wippe angreift. Durch die mechanische Übersetzungseinrichtung wird schliesslich gewährleistet, dass an der ersten Kraftmessvorrichtung (d.h. der Zeiger- bzw. Paketwaage) wieder diejenige Kraft angezeigt wird, welche an der Spannrolle angreift.

Greifen beispielsweise 20 kg (bzw. etwa 200 N) an der Spannrolle an, so würde die Federzugwaage (d.h. die zweite Kraftmessvorrichtung) am freien Ende der Wippe 10 kg anzeigen und die Zeigerwaage (d.h. die erste Kraftmessvorrichtung) an der Aussenseite des Klemmförderers würde wieder 20 kg anzeigen.

Mit der vorliegenden Erfindung kann mithin ein präzises Ablesen und Nachstellen der Riemenspannung gewährleistet werden. Ein Öffnen des Gehäuses des Klemmförderers ist hierfür nicht notwendig.

Die vorliegende Erfindung umfasst im Übrigen auch eine Spanneinheit für zumindest einen Riemen eines Klemmförderers für Vorformlinge für Kunststoffbehälter, aufweisend zumindest eine Spannrolle, über welche die Rücktrume des zumindest einen Riemens geführt sind, eine erste Kraftmessvorrichtung für eine an der Spannrolle angreifende Kraft, eine innerhalb des Klemmförderers angeordnete mechanische Übersetzungseinrichtung, wobei die Spannrolle über ein erstes Seilelement mit der mechanischen Übersetzungseinrichtung wirkverbunden ist, wobei die erste Kraftmessvorrichtung über ein zweites Seilelement mit der mechanischen Übersetzungseinrichtung wirkverbunden und mit einer Justiereinrichtung zum Einstellen der an der Spannrolle angreifenden Kraft gekoppelt ist.

Eine beispielhafte Ausführungsform der vorliegenden Erfindung wird im Hinblick auf eine bessere Anschaulichkeit in den beiliegenden Zeichnungen illustriert.

Es zeigt:
- Fig. 1: eine Draufsicht auf insbesondere die Spanneinheit eines erfindungsgemässen Klemmförderers;
- Fig. 2: eine Seitenansicht von insbesondere der Spanneinheit eines erfindungsgemässen Klemmförderers; und
- Fig. 3: eine Frontalansicht von insbesondere der Spanneinheit eines erfindungsgemässen Klemmförderers.

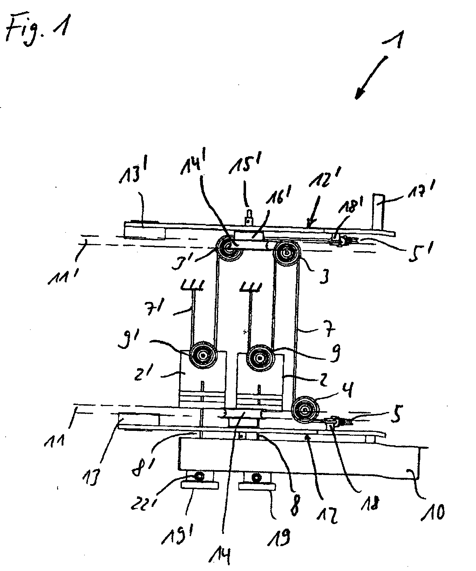

In **Fig. 1** wird der erfindungsgemässe Klemmförderer 1 bzw. dessen Spannvorrichtung in einer Ansicht von oben illustriert. Man erkennt die beiden sich gegenüberliegenden Klemmriemen 11, 11' des Klemmförderers 1, welche jeweils über die zugehörigen Spannrollen 14, 14' geführt sind.

Die Spannrollen 14, 14' werden jeweils von einer Wippe 12, 12' geführt. Die Wippen 12, 12' umfassen jeweils eine Gelenkverbindung 13, 13' mit welcher sie etwa am Maschinengestell oder an einem Teil des Gehäuses angelenkt sind. Die Wippen 12, 12' umfassen weiterhin ein Griffstück 17, 17', welches nach aussen hin absteht und ggf. zur manuellen Bedienung durch einen Maschinenführer dient. Die Wippen 12, 12' umfassen zudem jeweils einen nach innen gerichteten Zugbolzen 18, 18', über den eine Kraft auf die Wippen 12, 12' aufgebracht werden kann.

Die Spannrollen 14, 14' sind jeweils mittels eines Zapfens 15, 15' an der Wippe 12, 12' gelagert. Weiterhin ist jeweils ein Abstandhalter 16, 16' vorgesehen, so dass die Spannrollen 14, 14' innerhalb des Klemmförderers 1 in die Ebene gelangen, in welcher die Klemmriemen 11, 11' verlaufen.

Man erkennt des Weiteren das Gehäuseteil 10 und die Zeigerwaagen 19, 19' sowie die Zugmuttern 22, 22', deren Funktion weiter unten im Detail beschrieben wird. An den Zugbolzen 18, 18' bzw. an einer an den Zugbolzen 18, 18' jeweils angehängten Federzugwaage 20, 20' greift jeweils ein erstes Seilelement 7, 7' an, welches - auf der den Zeigerwaagen 19, 19' abgewandten Seite des Klemmförderers 1 - über eine senkrechte Umlenkrolle 5' sowie eine waagrechte Umlenkrolle 3' (welche jeweils innerhalb des Klemmförderers 1 angeordnet sind) zum Schlitten 2' bzw. um eine auf dem Schlitten 2' angeordnete Schlittenumlenkrolle 9' geführt wird. Das erste Seilelement 7, 7' wird schliesslich am Maschinengestell bzw. an einem geeigneten Teil des Gehäuses des Klemmförderers 1 befestigt.

Auf der den Zeigerwaagen 19, 19' zugewandten Seite des Klemmförderers 1 wird das erste Seilelement 7 über eine senkrechte Umlenkrolle 5 sowie zwei waagerechte Umlenkrollen 3, 4 innerhalb des Klemmförderers 1 zu dem Schlitten 2 bzw. um eine auf dem Schlitten 2' angeordnete Schlittenumlenkrolle 9 geführt und wiederum am Maschinengestell bzw. an einem geeigneten Teil des Gehäuses des Klemmförderers 1 befestigt. Auf dem Schlitten 2, 2' wird darüber hinaus jeweils ein Ende eines zweiten Seilelements 8, 8' befestigt bzw. festgeklemmt. Die Funktion des zweiten Seilelements 8, 8' wird weiter unten im Detail erläutert.

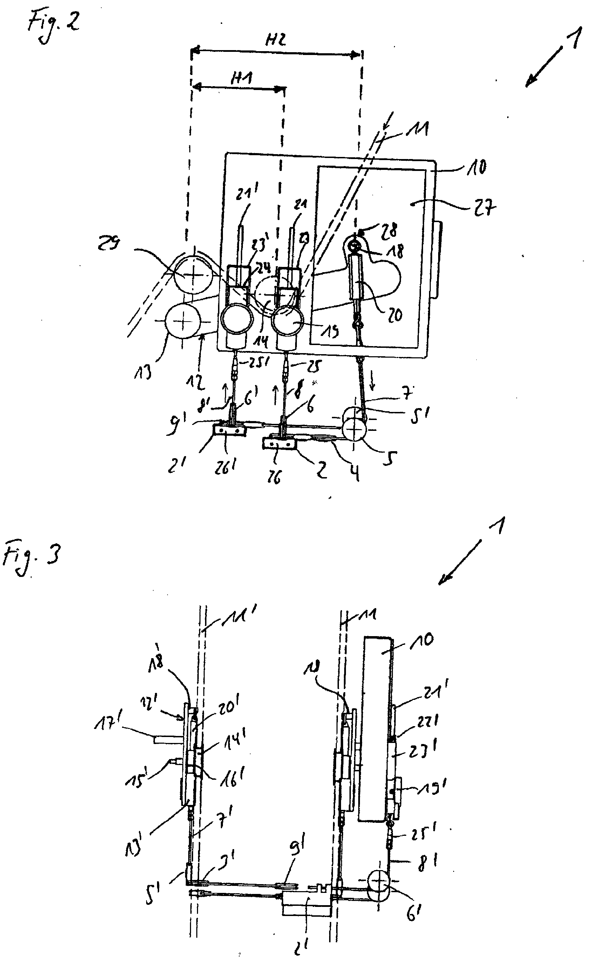

In **Fig. 2** sind in einer Seitenansicht zunächst die beiden Hebelarme H1 und H2 zu sehen, welche jeweils zwischen der Gelenkverbindung 13 und der Spannrolle 14 (H1) bzw. zwischen der Gelenkverbindung 13 und dem freien Ende 28 der Wippe 12 (H2) - bzw. dem an dem freien Ende 28 der Wippe 12 angeordneten Zugbolzen 18 - gebildet werden. Das Verhältnis der Hebelarme H1:H2 beträgt vorzugsweise 1:2. Man erkennt, wie der Klemmriemen 11 über die Spannrolle 14 und über eine stationäre Riemenrolle 29 geführt wird. Weiterhin ist zu sehen, wie jeweils das zweite Seilelement 8, 8' von den Schlitten 2, 2' über senkrechte Umlenkrollen 6, 6' geführt wird und mittels von Verbindungsstücken 25, 25' an den Zeigerwaagen 19, 19' angehängt wird. Die Zeigerwaagen 19, 19' weisen jeweils eine Aufhängevorrichtung 24, 24' auf, an welcher ein Gewindeschaft 21, 21' befestigt ist. Der Gewindeschaft 21, 21' wird jeweils durch ein am Gehäuseteil 10 fixiertes U-Profil 23, 23' hindurchgeführt und ist über eine Zugmutter 22, 22' verstellbar an dem U-Profil 23, 23' gelagert.

Im Sichtfenster 27 des Gehäuseteils 10 erkennt man im Übrigen noch einmal das freie Ende 28 der Wippe 12 mit dem Zugbolzen 18 sowie die an den Zugbolzen 18 angehängte Federzugwaage 20 sowie das an der Federzugwaage 20 angehängte erste Seilelement 7. Die Schlitten 2, 2' sind vorzugsweise, wie vorliegend in **Fig. 2** angedeutet, auf Führungsstangen 26, 26' geführt.

In der Frontalansicht gemäss **Fig. 3** erkennt man insbesondere noch einmal die auf dem Schlitten 2' angeordnete Schlittenumlenkrolle 9', von der das erste Seilelement 7' über die waagrechte Umlenkrolle 3' und über die senkrechte Umlenkrolle 5' zu der am Zugbolzen 18' angehängten Federzugwaage 20' verläuft.

Das auf dem Schlitten 2' befestigte bzw. festgeklemmte zweite Seilelement 8' wird wiederum über die senkrechte Umlenkrolle 6' geführt - welche in der Regel an einer Aussenseite des Klemmförderers befestigt ist (hier nicht gezeigt) - und über das Verbindungsstück 25' an der Zeigerwaage 19' angehängt.

Im Folgenden wird die Justierung des erfindungsgemässen Klemmförderers noch einmal im Einzelnen beschrieben.

Die Einstellung der Spannung der Klemmriemen 11, 11' kann vom Maschinenführer von aussen, d.h. ohne das Gehäuseteil 10 bzw. das Sichtfenster 27 öffnen zu müssen, vorgenommen werden. Durch Anziehen der Zugmutter 22, 22' wird die Zeigerwaage 19, 19' über ihre Aufhängung 14, 14' nach oben bewegt und über das an ihr angehängte zweite Seilelement 8, 8' wird die entsprechende Zugkraft FZ auf den Schlitten 2, 2' aufgebracht. Hier findet - je nach Betrachtungsweise - eine Über- bzw. Untersetzung statt. Mittels der Schlittenumlenkrolle 9, 9', welche auf dem Schlitten 2, 2' montiert ist, wird über das erste Seilelement 7, 7' die halbe Zugkraft FZ/2 an die Wippe 12, 12' weitergegeben, welche der Maschinenführer ggf. an der Federzugwaage 20, 20' ablesen kann. Die andere Hälfte der Zugkraft FZ wird aufgrund der Fixierung des ersten Seilelements 7, 7' in das Maschinengestell bzw. das Gehäuse geleitet. Innerhalb der Wippe 12, 12' findet aufgrund des (bevorzugten) Hebelarmverhältnisses H1:H2 = 1:2 wiederum eine Über- bzw. Untersetzung statt und auf die Spannrolle 14, 14' wird wieder die volle ursprüngliche Zugkraft FZ aufgebracht. Auf diese Weise kann der Maschinenführer - von aussen - präzise diejenige Kraft einstellen und ablesen, welche tatsächlich an der Spannrolle 14, 14' angreift.

Wird etwa in einer anderen Ausführungsform das erste Seilelement 7, 7' direkt an der Spannrolle 14, 14' befestigt (wenn z.B. keine Wippe vorhanden ist), so kann der Maschinenführer die erforderliche Zugkraft - wiederum von aussen - bereitstellen, indem er den doppelten Wert an der Zeigerwaage 19, 19' einstellt. Mit anderen Worten muss der Maschinenführer bei einer derartigen Ausführungsform die an der Zeigerwaage 19, 19' eingestellte Zugkraft umrechnen. Dies würde analog auch für andere, ggf. nicht-ganzzahlige, Über- bzw. Untersetzungsverhältnisse gelten.

### Bezugszeichenliste:

- 1: Klemmförderer
- 2, 2': Schlitten
- 3, 3': Umlenkrollen Innen (waagrecht)
- 4: zusätzliche Umlenkrolle Innen (waagrecht)
- 5, 5': Umlenkrollen Innen (senkrecht)
- 6, 6': Umlenkrollen Aussen (senkrecht)
- 7, 7': erstes Seilelement
- 8, 8': zweites Seilelement
- 9, 9': Schlittenumlenkrolle
- 10: Gehäuseteil
- 11, 11': Klemmriemen
- 12, 12': Wippe
- 13, 13': Gelenkverbindung
- 14, 14': Spannrolle
- 15, 15': Zapfen
- 16, 16': Abstandhalter
- 17, 17': Griffstück
- 18, 18': Zugbolzen
- 19, 19': Zeigerwaage (erste Kraftmessvorrichtung)
- 20, 20': Federzugwaage (zweite Kraftmessvorrichtung)
- 21, 21': Gewindeschaft
- 22, 22': Zugmutter
- 23, 23': U-Profil
- 24, 24': Aufhängevorrichtung
- 25, 25': Verbindungsstück
- 26, 26': Führungsstangen
- 27: Sichtfenster
- 28, 28': freies Ende (Wippe)
- 29, 29': stationäre Riemenrolle
- H1: erster Hebelarm
- H2: zweiter Hebelarm

## Patentansprüche

1. Klemmförderer zum Transport von Vorformlingen für Kunststoffbehälter mittels von zumindest einem Klemmriemen, wobei der Klemmförderer zumindest eine Spanneinheit aufweist mit
einer Spannrolle (14, 14'), über welche die Rücktrume des zumindest einen Klemmriemens (11, 11') geführt sind, **gekennzeichnet durch**
eine erste Kraftmessvorrichtung (19, 19') für eine an der Spannrolle (14, 14') angreifende Kraft,
eine innerhalb des Klemmförderers (1) angeordnete mechanische Übersetzungseinrichtung (2, 2'; 9, 9'),
wobei die Spannrolle (14, 14') zumindest über ein erstes Seilelement (7, 7') mit der mechanischen Übersetzungseinrichtung (2, 2'; 9, 9') wirkverbunden ist,
wobei die erste Kraftmessvorrichtung (19, 19') über ein zweites Seilelement (8, 8') mit der mechanischen Übersetzungseinrichtung (2, 2'; 9, 9') wirkverbunden und mit einer Justiereinrichtung (21, 21'; 23, 23') zum Einstellen der an der Spannrolle (14, 14') angreifenden Kraft gekoppelt ist.

2. Klemmförderer gemäss Anspruch 1, **dadurch gekennzeichnet, dass** die mechanische Übersetzungseinrichtung (2, 2'; 9, 9') in der Art eines Flaschenzugs ausgestaltet ist.

3. Klemmförderer gemäss Anspruch 2, **dadurch gekennzeichnet, dass** der Flaschenzug in Form eines beweglichen Umlenkblocks ausgestaltet ist.

4. Klemmförderer gemäss Anspruch 3, **dadurch gekennzeichnet, dass** der Umlenkblock in Form eines auf einer Führungseinrichtung (26, 26') geführten Schlittens (2, 2') ausgestaltet ist.

5. Klemmförderer gemäss Anspruch 4, **dadurch gekennzeichnet, dass** das erste Seilelement (7, 7') über eine Umlenkrolle (9, 9'), welche auf dem Schlitten (2, 2') angeordnet ist, geführt und stationär innerhalb des Klemmförderers (1) befestigt ist.

6. Klemmförderer gemäss einem der Ansprüche 1 bis 5, **dadurch gekennzeichnet, dass** zwischen der Spannrolle (14, 14') und dem ersten Seilelement (7, 7') eine zweite Kraftmessvorrichtung (20, 20') angeordnet ist.

7. Klemmförderer gemäss einem der Ansprüche 1 bis 6, **dadurch gekennzeichnet, dass** die erste Kraftmessvorrichtung (19, 19') und die Justiereinrichtung (21, 21'; 23, 23') an einer Aussenseite des Klemmförderers (1) angeordnet sind.

8. Klemmförderer gemäss einem der Ansprüche 1 bis 7, **dadurch gekennzeichnet, dass** das zweite Seilelement (8, 8') über zumindest eine Umlenkrolle (6, 6') an einer Aussenseite des Klemmförderers (1) zum beweglichen Schlitten (2, 2') geführt wird.

9. Klemmförderer gemäss einem der Ansprüche 1 bis 8, **dadurch gekennzeichnet, dass** das erste Seilelement (7, 7') über zumindest eine Umlenkrolle (3, 3'; 4; 5, 5') innerhalb des Klemmförderers (1) zum beweglichen Schlitten (2, 2') geführt wird.

10. Klemmförderer gemäss einem der Ansprüche 1 bis 9, **dadurch gekennzeichnet, dass** die Spannrolle (14, 14') in einer Wippe (12, 12') geführt wird.

11. Klemmförderer gemäss Anspruch 10, **dadurch gekennzeichnet, dass** die Wippe (12, 12') weiterhin eine Gelenkverbindung (13, 13') aufweist und ein freies Ende (28, 28'), wobei die Spannrolle (14, 14') zwischen der Gelenkverbindung (13, 13') und dem freien Ende (28, 28') der Wippe (12, 12') angeordnet ist.

12. Klemmförderer gemäss Anspruch 11, **dadurch gekennzeichnet, dass** das erste Seilelement (7, 7') mit dem freien Ende (28, 28') der Wippe (12, 12') wirkverbunden ist.

13. Klemmförderer gemäss Anspruch 12, **dadurch gekennzeichnet, dass** zwischen dem ersten Seilelement (7, 7') und dem freien Ende (28, 28') der Wippe (12, 12') eine zweite Kraftmessvorrichtung (20, 20') angeordnet ist.

14. Klemmförderer gemäss einem der Ansprüche 11 bis 13, **dadurch gekennzeichnet, dass** zwischen der Gelenkverbindung (13, 13') und der Spannrolle (14, 14') ein erster Hebelarm (H1) ausgebildet ist und dass zwischen der Gelenkverbindung (13, 13') und dem freien Ende (28, 28') ein zweiter Hebelarm (H2) ausgebildet ist.

15. Klemmförderer gemäss Anspruch 14, **dadurch gekennzeichnet, dass** der zweite Hebelarm (H2) in etwa doppelt so lang ist wie der erste Hebelarm (H1).

## Claims

1. A clamping conveyor for transporting preforms for plastics containers by means of at least one clamping belt, the clamping conveyor having at least one tensioning unit with
a tensioning roller (14, 14') over which the return strands of the at least one clamping belt (11, 11') are guided, **characterized by** a first force measuring apparatus (19, 19') for a force that acts on the tensioning roller (14, 14'),
a mechanical transmission device (2, 2'; 9, 9') arranged within the clamping conveyor (1),
wherein the tensioning roller (14, 14') is operatively connected to the mechanical transmission device (2, 2'; 9, 9') at least via a first cable element (7, 7'),
wherein the first force measuring apparatus (19, 19') is operatively connected to the mechanical transmission device (2, 2'; 9, 9') via a second cable element (8, 8') and is coupled to an adjusting device (21, 21'; 23, 23') for setting the force that acts on the tensioning roller (14, 14').

2. The clamping conveyor as claimed in claim 1, **characterized in that** the mechanical transmission device (2, 2'; 9, 9') is configured in the manner of a block and tackle.

3. The clamping conveyor as claimed in claim 2, **characterized in that** the block and tackle is configured in the form of a movable deflection pulley block.

4. The clamping conveyor as claimed in claim 3, **characterized in that** the deflection pulley block is configured in the form of a slide (2, 2') guided on a guide device (26, 26').

5. The clamping conveyor as claimed in claim 4, **characterized in that** the first cable element (7, 7') is guided over a deflection roller (9, 9') which is arranged on the slide (2, 2'), and is secured in a stationary manner within the clamping conveyor (1).

6. The clamping conveyor as claimed in any one of claims 1 to 5, **characterized in that** a second force measuring apparatus (20, 20') is arranged between the tensioning roller (14, 14') and the first cable element (7, 7').

7. The clamping conveyor as claimed in any one of claims 1 to 6, **characterized in that** the first force measuring apparatus (19, 19') and the adjusting device (21, 21'; 23, 23') are arranged on an outer side of the clamping conveyor (1).

8. The clamping conveyor as claimed in any one of claims 1 to 7, **characterized in that** the second cable element (8, 8') is guided to the movable slide (2, 2') over at least one deflection roller (6, 6') on an outer side of the clamping conveyor (1).

9. The clamping conveyor as claimed in any one of claims 1 to 8, **characterized in that** the first cable element (7, 7') is guided to the movable slide (2, 2') over at least one deflection roller (3, 3'; 4; 5, 5') within the clamping conveyor (1).

10. The clamping conveyor as claimed in any one of claims 1 to 9, **characterized in that** the tensioning roller (14, 14') is guided in a rocker (12, 12').

11. The clamping conveyor as claimed in claim 10, **characterized in that** the rocker (12, 12') furthermore has a jointed connection (13, 13') and a free end (28, 28'), wherein the tensioning roller (14, 14') is arranged between the jointed connection (13, 13') and the free end (28, 28') of the rocker (12, 12').

12. The clamping conveyor as claimed in claim 11, **characterized in that** the first cable element (7, 7') is operatively connected to the free end (28, 28') of the rocker (12, 12').

13. The clamping conveyor as claimed in claim 12, **characterized in that** a second force measuring apparatus (20, 20') is arranged between the first cable element (7, 7') and the free end (28, 28') of the rocker (12, 12').

14. The clamping conveyor as claimed in any one of claims 11 to 13, **characterized in that** a first lever arm (H1) is formed between the jointed connection (13, 13') and the tensioning roller (14, 14'), and **in that** a second lever arm (H2) is formed between the jointed connection (13, 13') and the free end (28, 28').

15. The clamping conveyor as claimed in claim 14, **characterized in that** the second lever arm (H2) is approximately twice as long as the first lever arm (H1).

## Revendications

1. Convoyeur par pincement pour le transport de préformés pour des récipients en plastique au moyen d'au moins une courroie de pincement, le convoyeur par pincement présentant au moins une unité de tension avec
une poulie de tension (14, 14') sur laquelle les sections retour de la au moins une courroie de pincement (11, 11') sont guidées, **caractérisé par** un premier dispositif de mesure de force (19, 19') pour une force agissant sur la poulie de tension (14, 14'),
un dispositif de transmission mécanique (2, 2'; 9, 9') disposé dans le convoyeur par pincement (1), dans lequel la poulie de tension (14, 14') est relié de façon opérationnelle au dispositif de transmission mécanique (2, 2'; 9, 9') au moins par un premier élément de câble (7, 7'),
dans lequel le premier dispositif de mesure de force (19, 19') est relié de façon opérationnelle au dispositif de transmission mécanique (2, 2'; 9, 9') par un deuxième élément de câble (8, 8') et est couplé à un dispositif d'ajustement (21, 21'; 23, 23') pour le réglage de la force qui agit sur la poulie de tension (14, 14').

2. Convoyeur par pincement selon la revendication 1, **caractérisé en ce que** le dispositif de transmission mécanique (2, 2'; 9, 9') est arrangé à la manière d'un palan.

3. Convoyeur par pincement selon la revendication 2, **caractérisé en ce que** le palan est arrangé en forme de bloc poulie de renvoi mobile.

4. Convoyeur par pincement selon la revendication 3, **caractérisé en ce que** le bloc poulie de renvoi est arrangé en forme d'un chariot (2, 2') guidé sur un dispositif de guidage (26, 26').

5. Convoyeur par pincement selon la revendication 4, **caractérisé en ce que** le premier élément de câble (7, 7') est guidé sur une poulie de renvoi (9, 9') qui est disposée sur le chariot (2, 2'), et attaché de façon fixe dans le convoyeur par pincement (1).

6. Convoyeur par pincement selon l'une des revendications 1 à 5, **caractérisé en ce qu'**un deuxième dispositif de mesure de force (20, 20') est disposé entre la poulie de tension (14, 14') et le premier élément de câble (7, 7').

7. Convoyeur par pincement selon l'une des revendications 1 à 6, **caractérisé en ce que** le premier dispositif de mesure de force (19, 19') et le dispositif d'ajustement (21, 21'; 23, 23') sont disposés sur une face externe du convoyeur par pincement (1).

8. Convoyeur par pincement selon l'une des revendications 1 à 7, **caractérisé en ce que** le deuxième élément de câble (8, 8') est guidé vers le chariot mobile (2, 2') sur au moins une poulie de renvoi (6, 6') sur une face externe du convoyeur par pincement (1).

9. Convoyeur par pincement selon l'une des revendications 1 à 8, **caractérisé en ce que** le premier élément de câble (7, 7') est guidé vers le chariot mobile (2, 2') sur au moins une poulie de renvoi (3, 3'; 4; 5, 5') dans le convoyeur par pincement (1).

10. Convoyeur par pincement selon l'une des revendications 1 à 9, **caractérisé en ce que** la poulie de tension (14, 14') est guidée dans une pièce basculante (12, 12').

11. Convoyeur par pincement selon la revendication 10, **caractérisé en ce que** la pièce basculante (12, 12') présente en outre une liaison articulée (13, 13') et une extrémité libre (28, 28'), la poulie de tension (14, 14') étant disposée entre la liaison articulée (13, 13') et l'extrémité libre (28, 28') de la pièce basculante (12, 12').

12. Convoyeur par pincement selon la revendication 11, **caractérisé en ce que** le premier élément de câble (7, 7') est relié de façon opérationnelle à l'extrémité libre (28, 28') de la pièce basculante (12, 12').

13. Convoyeur par pincement selon la revendication 12, **caractérisé en ce qu'**un deuxième dispositif de mesure de force (20, 20') est disposé entre le premier élément de câble (7, 7') et l'extrémité libre (28, 28') de la pièce basculante (12, 12').

14. Convoyeur par pincement selon l'une des revendications 11 à 13, **caractérisé en ce qu'**un premier bras de levier (H1) est formé entre la liaison articulée (13, 13') et la poulie de tension (14, 14'), et **en ce qu'**un deuxième bras de levier (H2) est formé entre la liaison articulée (13, 13') et l'extrémité libre (28, 28').

15. Convoyeur par pincement selon la revendication 14, **caractérisé en ce que** le deuxième bras de levier (H2) est approximativement deux fois plus long que le premier bras de levier (H1).
